# EUROPÄISCHE PATENTSCHRIFT

(11) **EP 1 053 451 B1**
(45) Veröffentlichungstag und Bekanntmachung des Hinweises auf die Patenterteilung: **30.03.2005**
(21) Anmeldenummer: 99903634.6
(22) Anmeldetag: 15.01.1999
(51) Int. Cl.: G01C 19/72

(54) **FASEROPTISCHES SAGNAC-INTERFEROMETER**
FIBRE OPTIC SAGNAC INTERFEROMETER
INTERFEROMETRE A FIBRES OPTIQUES DE TYPE SAGNAC

(30) Priorität: 28.01.1998 DE 19803223
(43) Veröffentlichungstag der Anmeldung: 22.11.2000
(73) Patentinhaber: LITEF GmbH, 79115 Freiburg (DE)
(72) Erfinder: BÜSCHELBERGER, Hanns, J., D-79199 Kirchzarten (DE); KEMMLER, Manfred, D-79279 Vörstetten (DE)
(74) Vertreter: Müller, Frithjof E., Dipl.-Ing.
(86) Internationale Anmeldenummer: PCT/EP1999/000218
(87) Internationale Veröffentlichungsnummer: WO 1999/039159

(56) Entgegenhaltungen:
- EP-A- 0 474 389
- DE-A- 3 446 663
- US-A- 4 944 591
- ULRICH R: "POLARIZATION AND DEPOLARIZATION IN THE FIBER-OPTIC GYROSCOPE" SELECTED PAPERS ON FIBER OPTIC GYROSCOPES, Nr. MS 8, 1. Januar 1982, Seiten 239-264, XP000232995 SMITH R B
- LEFEVRE H C ET AL: "PROGRESS IN OPTICAL FIBER GYROSCOPES USING INTEGRATED OPTICS" SELECTED PAPERS ON FIBER OPTIC GYROSCOPES, Nr. MS 8, 13. Januar 1985, Seiten 216-227, XP000232993 SMITH R B

## Beschreibung

Die Erfindung betrifft ein faseroptisches Sagnac-Interferometer gemäß dem Oberbegriff des Patentanspruchs 1.

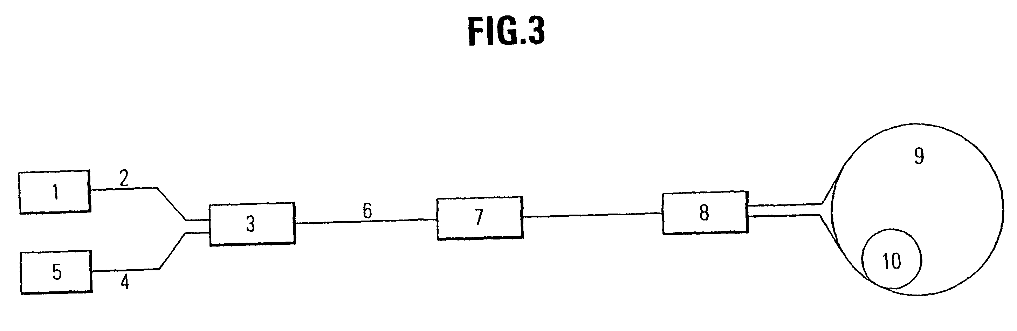

Faseroptisches Sagnac-Interferometer. insbesondere solche zur Bestimmung von Drehgeschwindigkeiten (Faserkreisel), werden heute häufig in einer sogenannten reziproken Minimalkonfiguration aufgebaut. Diese optische Architektur ist aus der Literatur bekannt und sei nachfolgend kurz anhand der Fig. 3 beschrieben.

Eine Lichtquelle 1. beispielsweise eine Superlumineszenzdiode (SLD). ist über einen Lichtwellenleiter 2 mit einem Koppler 3 verbunden. In Rückwärtsrichtung, also in Gegenrichtung zum von der Lichtquelle 1 eingestrahlten Licht, ist an diesen Koppler 3 über einen Lichtleiter 4 ein lichtempfindlicher Detektor 5, auch als Empfänger bezeichnet. angeschlossen. In Vorwärtsrichtung gelangt das eingestrahlte Licht über ein Raumfilter 6, einen Polarisator bzw. ein Polarisationsfilter 7 auf einen Strahlteiler 8. der das ankommende Licht zu etwa hälftig aufteilt. so daß der an den beiden Ausgängen des Strahlteilers 8 angeschlossene, vorzugsweise zu einer Spule gewikkelte Lichtwellenleiter 9 von zwei gegenläufigen Teillichtwellen durchdrungen wird. Die Teillichtwellen vereinigen sich nach dem Durchlauf durch den Lichtwellenleiter 9 wiederum im Strahlteiler 8 und durchlaufen das Polarisationsfilter 7. das Raumfilter 6. den Koppler 3 und den Lichtleiter 4 zum Empfänger 5. Im Lichtweg des zur Spule gewickelten Lichtwellenleiters 9 ist ein Phasenmodulator 10 vorgesehen, der über eine hier nicht gezeigte und im Zusammenhang mit der Erfindung nicht zu beschreibende Steuerelektronik einen geeigneten Arbeitspunkt des Interferometers gewährleistet.

Mathematische Modelle zur Beschreibung des über den Empfänger 5 erhaltenen Sensorsignals sind von vielen Wissenschaftlern und Autoren erstellt worden. Die durch physikalische Unzulänglichkeiten entstehenden Signalfehler sind durch Fehlermodelle beschrieben worden; siehe nur beispielshalber CA-Patent 1.276.274.

Für die oben kurz beschriebene optische Architektur von Faserkreiseln unterscheiden, die erwähnten Fehlermodelle Amplitudenfehler einerseits und Intensitätsfehler andererseits. Amplitudenfehler entstehen durch Interferenz aus Wellen, die vor dem Polarisationsfilter 7 orthogonal polarisiert sind und durch Kreuzkopplung in dieselbe Polarisationsrichtung überführt wurden. Intensitätsfehler entstehen durch Interferenz von Wellen, die ursprünglich gleich polarisiert waren und durch Kreuzkopplung in die andere Polarisationsrichtung gedreht wurden.

Ein wichtiger Parameter bei der mathematischen Beschreibung des Amplitudenfehlers ist das Polarisationsverhältnis des Lichts vor dem Polarisationsfilter, dem Polarisator. Je größer der vom Polarisator zu unterdrückende Anteil ist, um so größer fällt der Amplitudenfehler aus. Wird der Amplitudenfehler zum dominaten Fehleranteil, so besteht die technische Aufgabe diesen zu reduzieren.

Aus der US-A-5 365 3337 ist ein faseroptisches interferometrisches Gyroskop bekannt, welches einen optischen Schalter, der über ein Modenfilter aus zwei Teilen (Single-Mode Lichtleiter und Polarisator) mit einem Strahlteiler verbunden ist, besitzt. US-A-5 137 360, DE-A-34 46 663 und US-A-4 944 591 beschreiben ähnliche faseroptische Gyroskope.

Im Stand cier Technik ist es bekannt, beispielsweise Lichtquellen zu verwenden, die Licht mit hohem Polarisationsgrad abgeben. Dieses polarisierte Licht kann unter Verwendung von polarisationserhaltender Faser so bis an den Polarisator geleitet werden, daß der Anteil der falschen Polarisation gering ist. Falls keine polarisationserhaltende Faser zum Einsatz kommt, wird das Licht in der Regel vollständig depolarisiert, um den Zustand zu vermeiden, daß durch zufällige Drehung der Polarisationsrichtung nur ein sehr geringer Anteil des Lichts den nachfolgenden Polarisator passieren kann.

Ein erheblicher Kostenfaktor bei der ersterwähnten bekannten Lösung ist die Herstellung des Kopplers 3 an der Lichtquelle 1 bzw. dem Lichtempfänger 5 aus polarisationserhaltender Faser, da Faserkoppler aus polarisationserhaltender Faser erheblich teurer sind als solche aus einfacher Monomodefaser. Die Depolarisation des Lichts hat im letzteren Fall aber einen hohen Anteil von falscher Polarisation vor dem Polarisationsfilter 7 zur Folge, was den Amplitudenfehler leider verstärkt.

Der Erfindung liegt damit die Aufgabe zugrunde, den Amplitudenfehler als dominanten Fehleranteil innerhalb eines faseroptischen Sagnacinterferometers erheblich zu reduzieren, ohne auf Koppler aus polarisationserhaltender Faser angewiesen zu sein.

Die erfindungsgemäße Lösung besteht bei einem faseroptischen Sagnacinterferometer der im Oberbegriff des Patentanspruchs 1 angegebenen Gattung darin, daß zwischen dem als Auslesekoppler vorgesehenen Richtkoppler, in der Regel ausgeführt als 2 x 2 Koppler, an welchem die Lichtquelle und der lichtempfindliche Empfänger angeschlossen sind, sowie dem Polarisator ein Raumfilter aus einer polarisierenden Monomodefaser angeordnet ist. Dieses Raumfilter aus Monomodefaser unterdrückt unerwünschte räumliche Eigenschwingungen der Lichtquelle.

Bei einer Ausführungsform dieses Raumfilters aus einer Monomodefaser. die eine der beiden Polarisationsrichtungen des Lichts stark unterdrückt und die andere weitgehend unverändert passieren läßt, wird das Polarisationsverhältnis in der erwünschten Weise verändert, falls am Eingang dieses Raumfilters teilweise oder vollständig depolarisiertes Licht vorliegt. Am Eingang des Polarisationsfilters ist die Amplitude der zu unterdrückenden Mode dann gering. Diese Anordnung erfordert prinzipiell keine zusätzlichen Bauteile im optischen Pfad, sondern benötigt nur eine spezielle Ausführungsform des ohnehin erforderlichen Raumfilters. Eine mögliche Ausführungsvariante besteht darin, daß die Lichtquelle über einen Depolarisator an den zugeordneten Eingang des Richtkopplers angeschlossen ist.

Polarisierende Fasern können aus doppelbrechender Monomodefaser hergestellt werden: sie entfalten ihre beste Wirkung wenn sie kreisförmig mit einem bestimmten Durchmesser angeordnet sind. Die Cut-off-Wellenlänge (Grenzwellenlänge) für beide Polarisationsrichtungen liegt bei unterschiedlichen Wellenlängen. Werden diese Wellenlängen so gelegt, daß die Unterdrückung der einen Polarisation schon stark ausgeprägt ist während die andere Polarisation nur gering gedämpft wird, so wirkt ein solches Faserstück als Polarisationsfilter. Derartige Faserpolarisatoren sind prinzipiell bekannt: sie finden unter anderem Anwendung in faseroptischen Interferometern als Polarisationsfilter, um die Reziprozität des Lichtweges sicherzustellen. Bei der hier beschriebenen Anordnung eines faseroptischen Sagnacinterferometers dagegen ist für diese Funktion eine andere Komponente vorgesehen, insbesondere ein Polarisationsfilter innerhalb eines multifunktionalen Integrierte-Optik-Chips (IO-Chip).

Die erfindungsgemäße Zusammenschaltung eines Polarisationsfilters und eines Raumfilters, hergestellt aus einer polarisierenden Monomodefaser, ergibt eine weitere deutliche Reduktion des Amplitudenfehlers und trägt damit zur Steigerung der Meßgenauigkeit eines faseroptischen Sagnacinterferometers bei.

Ein Ausführungsbeispiel der Erfindung wird nachfolgend unter Bezug auf die **Fig. 1 und 2** beschrieben. wobei die aus der oben kurz erläuterten Minimalkonfiguration eines Faserkreisels gemäß Fig. 3 bekannten und beibehaltenen Komponenten nicht erneut erläutert werden.

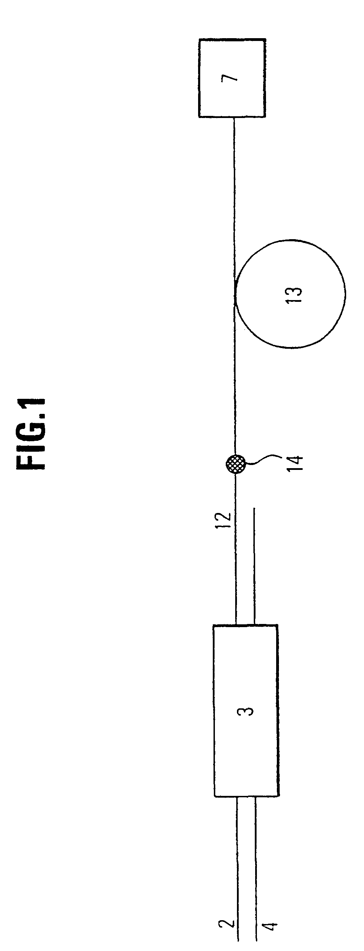

Fig. 1 zeigt einen Teilabschnitt aus der Konfiguration von Fig. 3, bei welcher der Richtkoppler 3 mit seinen Zuleitungen 2 und 4 ausgangsseitig einen Wellenleiteranschluß 12 aufweist, der über eine Verbindungsstelle 14 und ein als polarisierendes Raumfilter aus Monomodefaser bestehendes Wellenleiterstück 13 mit dem Polarisator 7 verbunden ist.

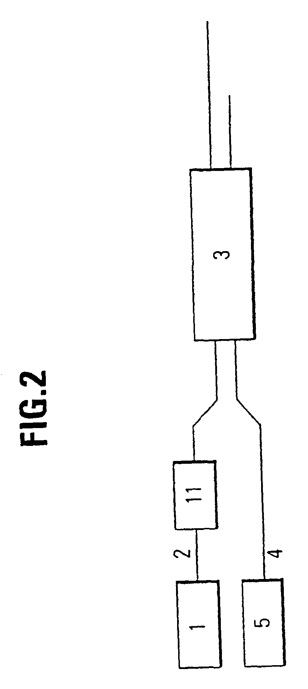

Bei der Ausführungsvariante der Fig. 2 ist die Lichtquelle 1 über einen Depolarisator 11 mit dem entsprechenden Eingang des Richtkopplers 3 verbunden.

## Patentansprüche

1. Faseroptisches Sagnac-Interferometer mit einer Lichtquelle (1), die über einen Lichtwellenleiter (2) an einen Eingang eines optischen Richtkopplers (3) angeschlossen ist, dessen wenigstens einer Ausgang über ein Raumfilter (6) und ein Polarisationsfilter (7) mit einem Strahlteiler (8) verbunden ist, der so angeordnet ist, dasser einerseits das vom Polarisationsfilter (7) durchgelassene Licht in zwei Teilstrahlen aufteilt, die in die beiden Enden eines Lichtwellenleiters (9) eingestrahlt werden und der andererseits die nach Durchlaufen des Lichtwellenleiters (9) über die jeweils anderen Enden des Lichtwellenleiters (9) zuückkommenden Teillichtstrahlen wieder vereinigt, wobei die wiedervereinigten Teillichtstrahlen zurück über das Polarisationsfilter (7), das Raumfilter (6) und den Richtkoppler (3) einen an letzteren angeschlossenen lichtempfindlichen Empfänger (5) beaufschlagen. **dadurch gekennzeichnet, dass** das Raumfilter (6; 13) aus einer polarisierenden Monomodefaser besteht.

2. Faseroptisches Sagnac-Interferometer nach Anspruch 1, **dadurch gekennzeichnet, dass** die Lichtquelle (1) über einen Depolarisator (11) an den zugeordneten Eingang des Richtkopplers (3) angeschlossen ist.

## Claims

1. Fibre-optic Sagnac interferometer having a light source (1) which is connected via an optical fibre (2) to an input of an optical directional coupler (3) whose at least one output is connected via a spatial filter (6) and a polarization filter (7) to a beam splitter (8) which is arranged so that, on the one hand, it splits the light transmitted by the polarization filter (7) into two component beams which are irradiated into the two ends of an optical fibre (9) and which, on the other hand, reunites the component light beams returning after traversing the optical fibre (9) via the respective other ends of the optical fibre (9), the reunited component light beams being applied in reverse direction via the polarization filter (7), the spatial filter (6) and the directional coupler (3) to a light-sensitive receiver (5) connected to the latter, **characterized in that** the spatial filter (6; 13) is produced from a polarizing monomode fibre.

2. Fibre-optic Sagnac interferometer according to claim 1, **characterized in that** the light source (1) is connected via a depolarizer (11) to the assigned input of the directional coupler (3).

## Revendications

1. Interféromètre de Sagnac à fibre optique comportant une source de lumière (1), qui est raccordée par l'intermédiaire d'un guide d'ondes de lumière (2) à une entrée d'un coupleur optique directionnel (3), dont au moins une sortie est reliée par l'intermédiaire d'un filtre spatial (6) et d'un filtre de polarisation (7) à un diviseur de faisceau (8), qui est disposé de telle sorte que d'une part la lumière transmise par le filtre de polarisation (7) est divisée en deux faisceaux partiels, qui sont introduits aux deux extrémités d'un guide d'ondes de lumière (9), et qui d'autre part réunit à nouveau les faisceaux de lumière partiels, qui arrivent après avoir traversé le guide d'ondes de lumière (9) par l'intermédiaire respectivement des autres extrémités du guide d'ondes lumineuses (9), les faisceaux de lumière partiels à nouveau réunis chargeant en retour, par l'intermédiaire du filtre de polarisation (7), du filtre spatial (6) et du coupleur directionnel (3), un récepteur (5) sensible à la lumière, raccordé au coupleur, **caractérisé en ce que** le filtre spatial (6;13) est constitué par une fibre monomode polarisante.

2. Interféromètre de Sagnac à fibres optiques selon la revendication 1, **caractérisé en ce que** la source de lumière (1) est raccordée par l'intermédiaire d'un dépolariseur (11) à l'entrée associée du coupleur directionnel (3).
